(19)

Europäisches
Patentamt
European
Patent Office
Office européen
des brevets

(11) **EP 2 927 483 A1**

(12) **EUROPEAN PATENT APPLICATION**

(43) Date of publication:
**07.10.2015 Bulletin 2015/41**

(51) Int Cl.:
*F03D 7/02* (2006.01)　　　*F03D 7/04* (2006.01)
*F03D 11/00* (2006.01)

(21) Application number: **14382128.8**

(22) Date of filing: **31.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alstom Renovables España, S.L.**
**08005 Barcelona (ES)**

(72) Inventors:
• **CARCANGIU, CARLO ENRICO**
**08018 BARCELONA (ES)**
• **PICARD, THOMAS**
**08029 BARCELONA (ES)**

(74) Representative: **ZBM Patents - Zea, Barlocci & Markvardsen**
**Plaza Catalunya, 1**
**08002 Barcelona (ES)**

(54) **Noise control in wind turbines**

(57)　Methods of operating a wind turbine under a noise reduction requirement are provided, comprising obtaining an angle of attack objective for a selected section of the blades, substantially continuously determining the angle of attack for the selected section of the blades, and substantially continuously pitching the blades to achieve the angle of attack objective for the selected section of the blades. Wind turbines suitable for such methods are also disclosed.

Fig. 3a

EP 2 927 483 A1

**Description**

The present disclosure relates to methods for operating a wind turbine, and more particularly to methods for operating a wind turbine under a noise reduction requirement. The present disclosure further relates to wind turbines suitable for carrying out such methods.

BACKGROUND

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft drives the generator rotor either directly ("directly driven") or through the use of a gearbox.

A variable speed wind turbine may typically be controlled by varying the generator torque and the pitch angles of the blades. As a result, aerodynamic torque, rotor speed and electrical power generated will vary.

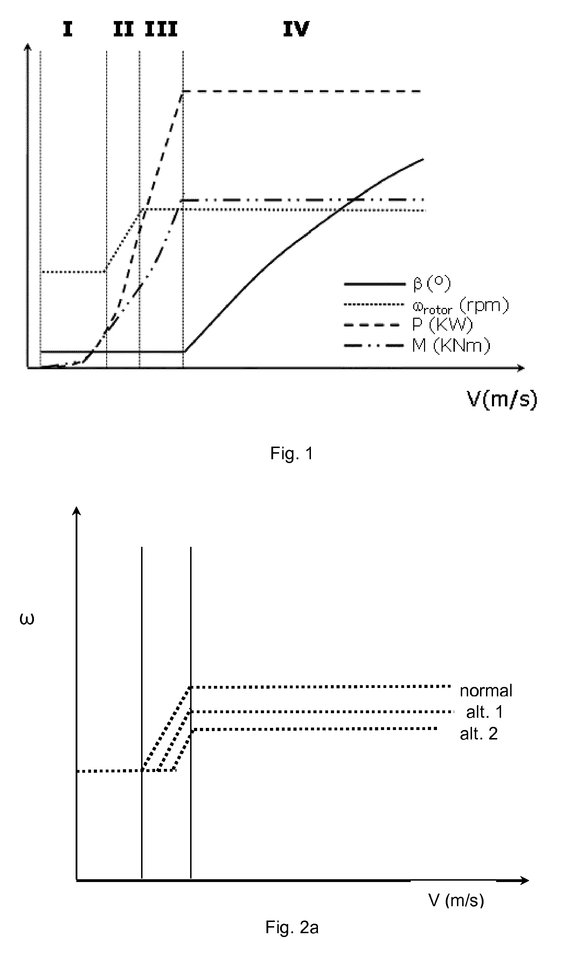

A common prior art control strategy of a variable speed wind turbine may be described with reference to figure 1a. In figure 1a, the operation of a typical variable speed wind turbine is illustrated in terms of the pitch angle (β), the electrical power generated (P), the generator torque (M) and the rotational velocity of the rotor (ω), as a function of the wind speed.

In a first operational range, from the cut-in wind speed to a first wind speed (e.g. approximately 5 or 6 m/s), the rotor may be controlled to rotate at a substantially constant speed that is just high enough to be able to accurately control it. The cut-in wind speed may be e.g. approximately 3 m/s.

In a second operational range, from the first wind speed (e.g. approximately 5 or 6 m/s) to a second wind speed (e.g. approximately 8.5 m/s), the objective may generally be to maximize power output while maintaining the pitch angle of the blades so as to capture maximum energy. In general, in the second operational range, the pitch angle of the blades may be substantially constant, although the optimal blade setting may theoretically depend on the instantaneous wind speed. In order to achieve this objective, the generator torque and rotor speed may be varied so as to keep the tip speed ratio λ (tangential velocity of the tip of the rotor blades divided by the prevailing wind speed) constant so as to maximize the power coefficient $C_p$.

In order to maximize power output and keep $C_p$ constant at its maximum value, the rotor torque may be set in accordance with the following equation: $T=k.\omega^2$, wherein

k is a constant, and ω is the rotational speed of the generator. In a direct drive wind turbine, the generator speed substantially equals the rotor speed. In a wind turbine comprising a gearbox, normally, a substantially constant ratio exists between the rotor speed and the generator speed.

In a third operational range, which starts at reaching nominal rotor rotational speed and extends until reaching nominal power, the rotor speed may be kept constant, and the generator torque may be varied to such effect. In terms of wind speeds, this third operational range extends substantially from the second wind speed to the nominal wind speed e.g. from approximately 8.5 m/s to approximately 11 m/s.

In a fourth operational range, which in some cases may extend from the nominal wind speed to the cut-out wind speed (for example from approximately 11 m/s to 25 m/s), the blades may be rotated ("pitched") to maintain the aerodynamic torque delivered by the rotor substantially constant. In practice, the pitch may be actuated such as to maintain the rotor speed substantially constant. At the cut-out wind speed, the wind turbine's operation is interrupted.

In the first, second and third operational ranges, i.e. at wind speeds below the nominal wind speed (the sub-nominal zone of operation), the blades are normally kept in a constant pitch position, namely the "below rated pitch position". Said default pitch position may generally be close to a 0° pitch angle. The exact pitch angle in "below rated" conditions however depends on the complete design of the wind turbine.

The before described operation may be translated into a so-called power curve, such as the one shown in figure 1.

One of the problems related to wind turbines is the noise that is produced by the turbine. Noise is one of the reasons for why there can be a lot of resistance against the installation of wind turbines in the vicinity of communities. Requirements with respect to noise have found their way in regulations and such requirement thus have to be satisfied by wind turbines.

Noise in wind turbines can have a number of causes. One of the most important sources of noise in wind turbines is aerodynamic noise, in particular the vortices formed around the trailing edge at the tips of the rotor blades. Vortices in the turbulent layer may be shed into the wake when the aerodynamic flow is detached. This then generates pressure fluctuations when passing over the trailing edge. The noise produced at the tips depends on a number of factors including the wind speed, the rotor speed, and boundary layer displacement thickness.

(The boundary layer displacement thickness (δ*) may be defined as the distance by which a surface would have to be moved in the direction perpendicular to its normal vector away from the reference plane in an inviscid fluid stream having the free stream velocity to give the same flow rate as occurs between the surface and the reference plane in a real fluid.)

Noise requirements may have to be satisfied by wind turbines depending e.g. on the time of the day (e.g. at night, less noise may be emitted than during the day), and the wind direction (depending on the wind direction, noise may be emitted in a direction of an inhabited area or not). Noise limits may be further fixed as either absolute values or as relative values taking into account ambient prevailing noise.

A traditional way of coping with such noise requirements is to have a number of predefined operational strategies, each for a specific noise requirement. These strategies may generally be based on reducing the rotor speed. The more stringent the noise requirement, the more the rotor speed is reduced. At the same time, in order to avoid stall, the blades may generally be pitched so that the angle of attack on the blades is reduced.

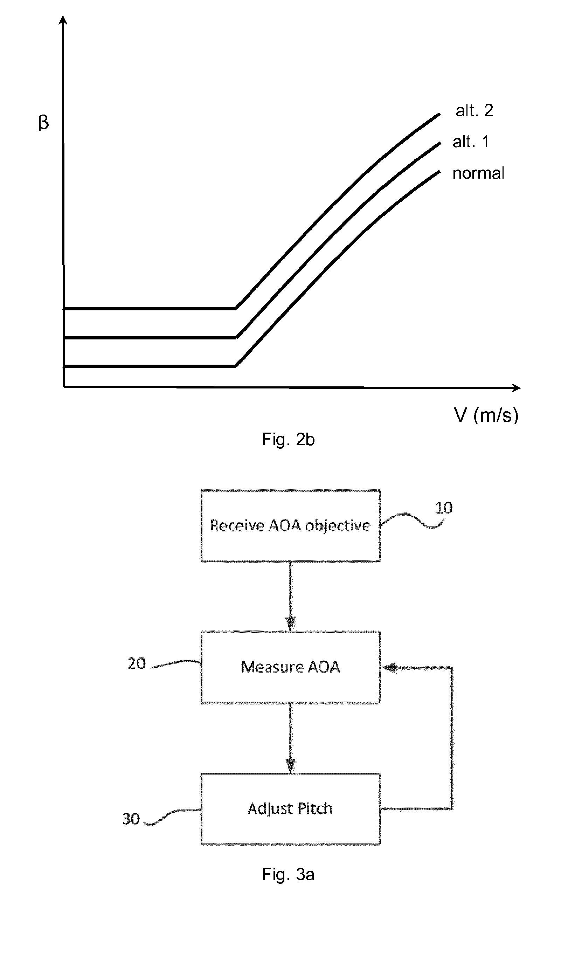

Such alternative control strategies are schematically illustrated in figures 2a and 2b. Figures 2a and 2b respectively show the control curves for the rotor speed and the pitch angle respectively, both for "normal" control, and for predefined alternatives.

The first alternative ("alt. 1") represents a less stringent noise control, than the second alternative ("alt. 2"). In both predetermined strategies, the rotor speed is reduced and also the blades are pitched.

The result of these strategies is generally that the noise of the wind turbines is reduced, but at the same time, that the electrical power production is also significantly reduced. Another drawback of such solutions is that they are predefined and are not necessarily adapted to the specific wind conditions that may occur. Nor is the actual noise that is produced taking into account in any way.

WO 2012/146252 discloses an alternative method, in which actual noise measurements may be made and used in the control of the wind turbine. A disadvantage related to such a method is that actual noise measurements may be very complicated and it may be particularly complicated to determine the precise source of any noise that is measured.

The present disclosure relates to various methods and systems for avoiding or at least partly reducing one or more of the aforementioned problems.

SUMMARY

In a first aspect, a method of operating a wind turbine under a noise reduction requirement is provided. The wind turbine comprises a rotor with a plurality of blades and one or more pitch systems for rotating the blades, and the method comprises obtaining an angle of attack objective for a selected section of the blades, substantially continuously determining the angle of attack for the selected section of the blades, and substantially continuously pitching the blades to achieve the angle of attack objective for the selected section of the blades.

In accordance with this aspect, a noise reduction requirement may be converted into an angle of attack requirement. The angle of attack of a blade section has an important influence on the noise produced by the blade section. Specifically with respect to a blade section at or near the tip of the blades, the angle of attack has an influence on the formation of vortices, on the boundary layer displacement thickness and on the frequency of the noise emitted. A reduction in angle of attack (AOA) has a direct lowering effect on the noise produced, but also an indirect effect via a reduction of the boundary layer displacement thickness and by shifting the noise emitted towards frequencies at which the human ear is less sensitive.

Instead of a standard reduction of a rotor speed, which leads to a significant loss of production, in this aspect, measures are taken that are adapted to changing wind conditions. Changing wind conditions, and also effects such as wind shear, wind veer, and turbulence can be taken into account, as the angle of attack is (directly or indirectly) measured continuously and the wind turbine is adapted to achieve an angle of attack objective. In particular, under wind shear or wind veer conditions, the continuous monitoring of the angle of attack may in some cases eventually result in a cyclic pitch while adapting the angle of attack to existing wind conditions over the rotor area.

A PID (proportional-integral-derivative) controller may be used in some examples. In these examples, an error value (current AOA - objective AOA) may be determined substantially continuously and control signals may be set in accordance with the error value. PID control herein is to be understood as encompassing P, PI or PD control, i.e. any PID control in which one or more of the gains is zero. PID control however is only one example of a closed loop ("feedback") control.

In some examples, the selected section of the blades is a section at or near a tip of the blades. The angle of attack may be different for each section of a rotor blade: the effective wind speed for a wind blade is determined partly by the rotational speed of the rotor blade section. This rotational speed is dependent on the rotor speed and on the distance of the specific section towards the rotational axis. Furthermore, twist angles may differ along the blade. Additionally, the wind speed is not necessarily constant over the whole rotor swept area. Since most noise is produced by the tip sections of the blades, preferably the selected section of the blade of which the angle of attack is determined is chosen at or near the tip.

Determining the angle of attack for the selected section of the blades may be done in a variety of ways, including measuring one or more properties of an aerodynamic flow, in particular flow properties in the vicinity of the blades. Suitably placed and oriented LIDAR systems could be used. Alternatively, pressure taps or pitot tubes mounted on the blades could be used. Determining the angle of attack may also be done indirectly, e.g. by measuring loads on the blades with strain gauges.

In some examples, the blades may furthermore comprise one or more deformable trailing edge sections (e.g. trailing edge flaps). In these examples, in which the angle of attack objective is an angle of attack reduction (with respect to normal operation), the method may furthermore comprise actuating the deformable trailing edge sections to substantially compensate the reduction of the angle of attack, thus limiting power losses arising from noise reduction strategies. Furthermore, the use of deformable trailing edge sections may provide improved performance in front of local wind variations over the rotor swept area or if fast changing wind conditions, such as those induced by e.g. wind gusts, exist.

In another aspect, a wind turbine is provided comprising a rotor with a plurality of blades, one or more pitch systems for rotating the blades around their longitudinal axes, and a control system configured to carry out any of the methods disclosed herein. Optionally, such a wind turbine may further comprise deformable trailing edge surfaces.

BRIEF DESCRIPTION OF THE DRAWINGS

Non-limiting examples of the present disclosure will be described in the following, with reference to the appended drawings, in which:

Figure 1 illustrates a typical power curve of a wind turbine;

Figures 2a and 2b schematically illustrate examples of predefined alternative control strategies to cope with a noise reduction requirement;

Figure 3a schematically illustrates an example of a method for operating a wind turbine under a noise reduction requirement;

Figure 3b schematically illustrates an example of an implementation of the method of figure 3a; and

Figures 4a and 4b schematically illustrate the effect of a flap on a lift coefficient of an aerodynamic profile.

DETAILED DESCRIPTION

The power curve of figure 1 has been discussed before. Also, figures 2a and 2b have been discussed before.

Figure 3a schematically illustrates an example of a method for operating a wind turbine under a noise reduction requirement. At block 10, an angle of attack (AOA) objective may be received by a wind turbine. Such an AOA objective may be received from a database (or look-up table) correlating a certain noise requirement with an AOA objective. The AOA objective may be particularly related to an objective for a section of the blade at or near the tip.

At block 20, an actual AOA may be measured. Different types of measurements may be performed and different types of sensors may be used. Some examples may be based on a direct measurement of the flow properties, such as e.g. using a LIDAR system. Alternative examples may employ pitot tubes and/or pressure taps on the blades. From such measurements, an instantaneous value of AOA may be derived.

Yet further examples may be based on measuring loads in the blades using e.g. strain gauges. If load measurements are used, loads may preferably be measured close to the tip section, so that these measurements are not influenced by possible angle of attack variations along the blade.

Based on such measurements, a pitch angle of the blade may be adjusted to achieve the AOA objective at block 30. This process may be done substantially continuously, i.e. substantially continuously the actual AOA may be measured and pitch commands may be sent to adjust the pitch angles of the blades so that the AOA objective is reached for the relevant blade section. In an example, a PID control may be implemented.

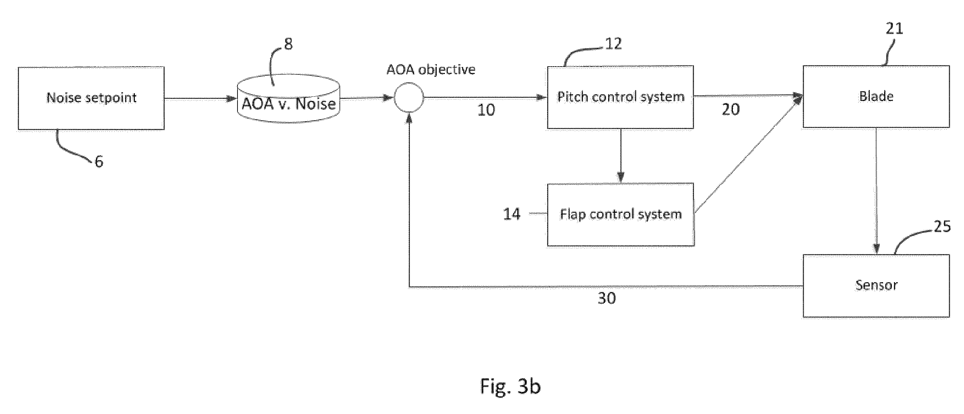

Figure 3b schematically illustrates an example of an implementation of the method of figure 3a. A noise setpoint 6 may be determined by a client (wind park operator for example) or may be directly derived from local regulations based on e.g. the day of the year, wind direction, wind speed, and time of the day.

In a database 8 (or look-up table), a plurality of noise setpoints may be defined, and for each of these noise setpoints, an AOA objective may be given.

In some examples, the AOA objective may take into account maximum decibels (dB) that may be produced. In an alternative example, the AOA objective may take into account dBA instead of dB. dBA take into account the sensitivity of the human ear to different frequencies. In this sense, the amount of dB produced is not always a good indicator for the disturbance caused by a noise. A better indicator may be given by dBA, which may be obtained by applying a weighting filter to the dBs produced. As mentioned before, reducing the angle of attack has a tendency to shift the frequencies of the noise emitted towards frequencies to which the human ear is less sensitive. A control of the angle of attack as proposed herein is thus suitable for reducing dBA emitted.

One or more sensor 25 may be used to measure an AOA and provide 30 the instantaneous value of the AOA for a blade. A comparison between the AOA objective and the actual AOA may give an error value. From the error value, appropriate commands may be determined for either pitching the blade more or less. For example, the error value may be the input for a PID control loop.

A pitch control system 12 may rotate a blade 21. The setting of the pitch control system 12 may also be forwarded to a flap control system 14. A flap may be controlled to at least partially counteract a loss of lift due to pitching of the blade. To this end, the flap may be moved towards a pressured side of the blade. When the pitch angle is reduced again, the flap angle may be reduced again. In this sense, the flap angle is directly dependent on the pitch angle of the blade.

Inventors have found that noise produced by wind turbine blades is much more sensitive to an angle of attack variation than to a setting of a flap angle. Flaps may thus be used to maintain the electrical power production at a high level. Depending on the circumstances, the rotor speed of the wind turbine does not even need to be reduced under a noise reduction requirement. Using flaps (or other deformable trailing edge devices), the electrical power production may be kept at the same level as before the noise reduction requirement entered into force.

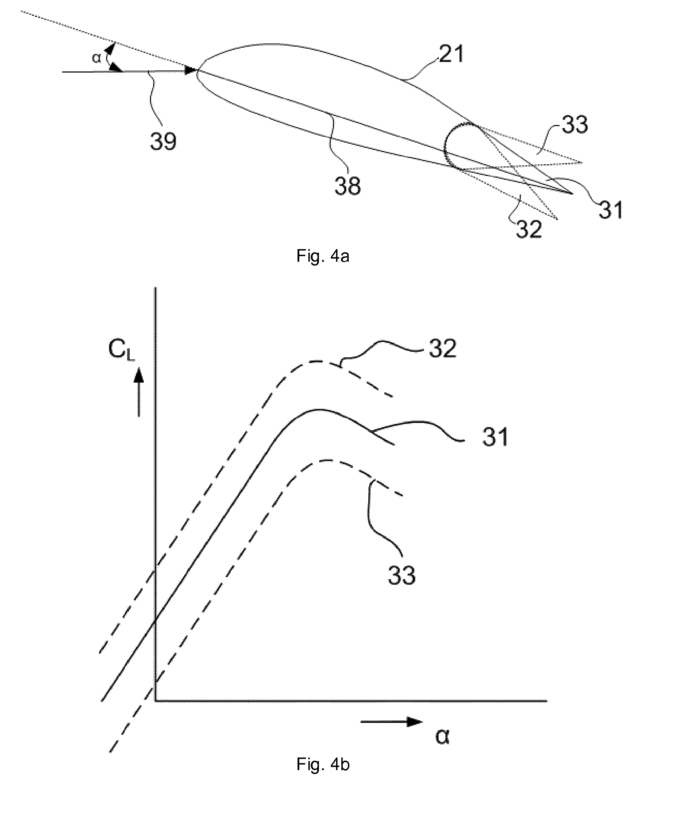

Figures 4a and 4b illustrate the effect of a flap on the lift coefficient of an aerodynamic profile for different angles of attack and different flap positions. The aerodynamic profile is merely shown as an example of a profile that may be used as a section of a wind turbine rotor blade.

Figure 4a illustrates a profile 21 comprising a flap in three different positions: a neutral position 31, a positive position 32 (in which the flap has a positive contribution to the lift) and a negative position 33 (in which the flap has a negative contribution to the lift). A flap can have a positive contribution to lift when it is moved towards the pressure side of a blade.

Figure 4b illustrates a typical curve 31 of the lift coefficient of a profile vs. angle of attack. The angle of attack $\alpha$ has been illustrated in figure 4a and may be defined as the angle between a reference line on a lifting body (in this case, the chord line of an airfoil 38) and the vector 39 representing the relative motion between the blade and the air through which it is moving.

In the case of a wind turbine, the vector representing the relative motion between the blade and the air may be composed of two components: the wind velocity $v_w$ and the rotational velocity of the local portion of the blade $v_r$. The rotational velocity of the local portion of the blade may be expressed as

$$v_r = 2\pi . r . \frac{n}{60}$$

, wherein r is the radius of the local portion of the blade and n is the number of revolutions per minute. The total wind velocity experienced by the blade portion may thus be expressed as

$$v = \sqrt{v_r^2 + v_w^2}$$

, and the angle of attack may be determined in accordance with:

$$\tan \alpha = \frac{v_w}{v_r}$$

The angle of attack of a portion of the blade may thus be affected by the prevailing wind speed, the rotational speed of the rotor, its position along the blade span, the design twist of the airfoil and the pitch angle of the blade.

The typical curve 31 shows that with increasing angle of attack, the lift coefficient of the profile increases, until "stall". If the angle of attack is increased further, the lift coefficient is reduced.

If a flap is put in its positive position, the lift of the airfoil is increased. A curve 32 that is substantially parallel to curve 31 may be the result: for any angle of attack, the lift coefficient is slightly higher. Similarly, a curve 33 that is substantially parallel to curve 31 corresponds to the same profile, but with the flap in a negative position. It will be clear that in practice, the curves of the lift coefficient may be different for any profile employed on a blade.

It may be deducted from the illustrated curves that if noise is to be reduced, the pitch angle of the blades may be increased so as to reduce the angle of attack of a blade section. At the same time, a flap may be used to compensate a loss of lift.

In different examples, different trailing edge flaps may be used, such as e.g. a "plain flap", a "split flap", a "slotted flap" or e.g. a "Fowler flap". Other movable trailing edge surfaces may also be used. For example, also a Continuously Deformable Trailing Edge (CDTE) may also be used. In some embodiments, a blade may comprise one or more portions that are continuously deformable along its span.

Depending on which kind of flap or movable surface is used, the influence on the curves of the lift coefficient and drag coefficient may vary. In general, actuating the flap towards its positive position increases the curvature of an airfoil, which increases the lift. It further increases the drag, but generally to a lesser extent. As such, the loads on a blade increase, but this may be acceptable, in accordance with circumstances. The increase of the lift increases the aerodynamic torque of the rotor.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

**Claims**

1. Method of operating a wind turbine under a noise reduction requirement, the wind turbine comprising a rotor with a plurality of blades and one or more pitch systems for rotating the blades, the method comprising
obtaining an angle of attack objective for a selected section of the blades,
substantially continuously determining the angle of attack for the selected section of the blades, and substantially continuously pitching the blades to achieve the angle of attack objective for the selected section of the blades.

2. Method according to claim 1, wherein the selected section of the blades is a section at or near a tip of the blades.

3. Method according to claim 1 or 2, wherein determining the angle of attack for the selected section of the blades comprises measuring one or more properties of an aerodynamic flow.

4. Method according to claim 3, wherein measuring the properties of an aerodynamic flow comprises using a LIDAR.

5. Method according to claim 3 or claim 4, wherein measuring the properties of an aerodynamic flow comprise measuring properties of an aerodynamic flow at or near the blades.

6. Method according to claim 1 or 2, wherein determining the angle of attack for the selected section of the blades comprises measuring one or more loads in the blades.

7. Method according to any of claims 1 - 6, wherein a rotational speed of the rotor is substantially not changed.

8. Method according to any of claims 1 - 7, comprising a PID control of the angle of attack to satisfy the angle of attack objective.

9. Method according to any of claims 1 - 8, wherein the angle of attack objective is a reduction of an angle of attack, and wherein the blades further comprise one or more deformable trailing edge sections, and the method further comprising
actuating the deformable trailing edge sections to substantially compensate the reduction of the angle of attack.

10. Method according to any of claims 9, wherein the deformable trailing edge sections comprise one or more trailing edge flaps.

11. Wind turbine comprising
a rotor with a plurality of blades,
one or more pitch systems for rotating the blades around their longitudinal axes, and
a control system configured to carry out any of the methods according to any of claims 1 - 8.

12. Wind turbine comprising according to claim 11, wherein the blades further comprise one or more deformable trailing edge sections, and the control system is further configured to carry out a method according to claim 9.

13. Wind turbine according to claim 12, wherein the deformable trailing edge sections comprise one or more trailing edge flaps.

I    II III          IV

β (°)
ω_rotor (rpm)
P (KW)
M (KNm)

V(m/s)

Fig. 1

ω

normal
alt. 1
alt. 2

V (m/s)

Fig. 2a

β

alt. 2

alt. 1

normal

V (m/s)

Fig. 2b

Receive AOA objective    10

Measure AOA    20

Adjust Pitch    30

Fig. 3a

Fig. 3b

Fig. 4a

Fig. 4b

Europäisches
Patentamt

European
Patent Office

Office européen
des brevets

## EUROPEAN SEARCH REPORT

Application Number

EP 14 38 2128

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 543 876 A2 (GEN ELECTRIC [US]) 9 January 2013 (2013-01-09) | 1-8,11 | INV. F03D7/02 |
| Y | * paragraphs [0006] - [0008], [0017] - [0027], [0030], [0031], [0034] - [0039] * | 9,10,12, 13 | F03D7/04 F03D11/00 |
| Y,D | WO 2012/146252 A2 (VESTAS WIND SYS AS [DK]; ABDALLAH IMAD [DK]; GODSK KRISTIAN [DK]; ROMB) 1 November 2012 (2012-11-01) * the whole document * | 9,10,12, 13 | |
| A | EP 2 000 665 A2 (GAMESA INNOVATION & TECH SL [ES]) 10 December 2008 (2008-12-10) * paragraphs [0011] - [0013], [0016] - [0022] * | 1-13 | |
| A | US 2010/074748 A1 (GODSK KRISTIAN BALSCHMIDT [DK] ET AL) 25 March 2010 (2010-03-25) * the whole document * | 1-13 | |
| A | US 2012/171036 A1 (WESTERGAARD CARSTEN HEIN [US]) 5 July 2012 (2012-07-05) * the whole document * | 1-13 | TECHNICAL FIELDS SEARCHED (IPC) F03D |

The present search report has been drawn up for all claims

| Place of search | Date of completion of the search | Examiner |
|---|---|---|
| The Hague | 8 September 2014 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 14 38 2128

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2014

| Patent document cited in search report | | Publication date | Patent family member(s) | | Publication date |
|---|---|---|---|---|---|
| EP 2543876 | A2 | 09-01-2013 | CN | 103061965 A | 24-04-2013 |
| | | | EP | 2543876 A2 | 09-01-2013 |
| | | | US | 2012027592 A1 | 02-02-2012 |
| WO 2012146252 | A2 | 01-11-2012 | CN | 103620216 A | 05-03-2014 |
| | | | EP | 2712401 A2 | 02-04-2014 |
| | | | US | 2014248148 A1 | 04-09-2014 |
| | | | WO | 2012146252 A2 | 01-11-2012 |
| EP 2000665 | A2 | 10-12-2008 | CN | 101410615 A | 15-04-2009 |
| | | | EP | 2000665 A2 | 10-12-2008 |
| | | | ES | 2261100 A1 | 01-11-2006 |
| | | | US | 2011123330 A1 | 26-05-2011 |
| | | | WO | 2007110459 A1 | 04-10-2007 |
| US 2010074748 | A1 | 25-03-2010 | AT | 490405 T | 15-12-2010 |
| | | | CN | 101680424 A | 24-03-2010 |
| | | | EP | 2153062 A2 | 17-02-2010 |
| | | | ES | 2357077 T3 | 18-04-2011 |
| | | | US | 2010074748 A1 | 25-03-2010 |
| | | | WO | 2008145126 A2 | 04-12-2008 |
| US 2012171036 | A1 | 05-07-2012 | EP | 2659276 A1 | 06-11-2013 |
| | | | US | 2012171036 A1 | 05-07-2012 |
| | | | WO | 2012089210 A1 | 05-07-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2012146252 A